# EUROPEAN PATENT SPECIFICATION

(11) **EP 3 153 060 B1**
(45) Date of publication and mention of the grant of the patent: **13.06.2018**
(21) Application number: 16191745.5
(22) Date of filing: 30.09.2016
(51) Int. Cl.: A45D 40/16, B29L 31/00, B29C 33/04, B29C 33/36

(54) **MACHINE FOR FORMING LIPSTICKS**
MASCHINE ZUR HERSTELLUNG VON LIPPENSTIFTE
MACHINE POUR FORMER ROUGES À LÈVRES

(30) Priority: 09.10.2015 IT UB20154274
(43) Date of publication of application: 12.04.2017
(73) Proprietor: Cosmatic S.r.l., 20876 Ornago (MB) (IT)
(72) Inventor: DEL PICCOLO, Giuseppe, 20876 Ornago (MB) (IT)
(74) Representative: Vanosi, Adelio Valeriano

(56) References cited:
- EP-A1- 1 437 062
- FR-A- 1 137 441
- JP-B2- 3 357 994
- US-A- 4 172 113

## Description

### FIELD OF THE INVENTION

The present invention relates to a machine for forming lipsticks.

In particular, it refers to a machine for forming lipstick make-up.

### STATE OF THE ART

Known machines for forming lipsticks provide a rotating or translating table, in which deformable molds of lipsticks are housed, normally in two columns and in a plurality of rows.

In the case of rotating tables, the molds are normally arranged in two concentric columns. The rotating table moves the molds discreetly (step by step) from and towards the various units provided on the forming machine.

As an example, the forming machine can comprise units for pre-heating the molds, units for pouring a liquefied cosmetic paste inside the molds, cooling unit of the molds (and consequently of the paste poured into them) and units for extracting and moving the poured and cooled sticks.

The rotating table thus positions the molds so that the various units can operate on them effectively, for a time period necessary to complete the required operations. During such a time period, the molds are thus stationary in the various units. Once the various required operations are completed, the molds are taken away by a unit and conveyed to the next one, to thus carry out the different processing operations in sequence.

An essential unit of this type of machine is the cooling unit. Indeed, it is necessary to cool the molds (and therefore their content) homogeneously and completely before proceeding to the extraction of the stick formed in them. The molds remain inside this unit, moving step by step, for longer with respect to the others. In fact, the cooling unit is capable of simultaneously cooling a large number of molds that are being processed simultaneously at such a unit.

In conventional cooling units, walls are provided that, together with the movable table, form a conduit in which cold air is circulated, through one or more fans. The air that flows in the conduit licks the molds and thus cools them.

It has been found that this cooling method is not particularly efficient.

Precisely for this reason, conventional lipstick machines provide cooling units that extend for a major part of the machine itself and that thus cover much of the circumference or length of the table. In this way, the molds can remain inside the cooling unit for the time necessary to obtain solidification of the stick.

JP 3 357994 B2 describes a lipstick machine according to the preamble of claim 1. having a cooling unit capable of conveying the refrigerating in an axial direction with respect of the mould, from its top to its bottom. The refrigerating action provided on the mould by this system is not homogenous as the cooling fluid warms up flowing from the top of the mold to its bottom. Therefore, the bottom part of the mould may not be refrigerated with the same efficiency of the top part.

### SUMMARY OF THE INVENTION

The purpose of the present invention is to provide a machine for forming lipsticks, which has a cooling unit that is more efficient with respect to conventional ones, as defined in claim 1. Preferred features of the invention are set-out in the dependent claims. Advantageously, the machine according to the present invention can be less bulky than conventional ones, can cool the molds more quickly and can allow a substantial energy saving.

### BRIEF DESCRIPTION OF THE FIGURES

Further characteristics and advantages of the invention will become clear from the description of a preferred but not exclusive embodiment of the device, illustrated as an example and therefore not for limiting purposes in the attached drawings, in which:
figure 1 is a simplified plan view of a machine for forming lipsticks according to the present invention ;
figure 2 is a perspective view of a part of a cooling unit of the machine of figure 1;
figure 3 is an enlarged detail of figure 2;

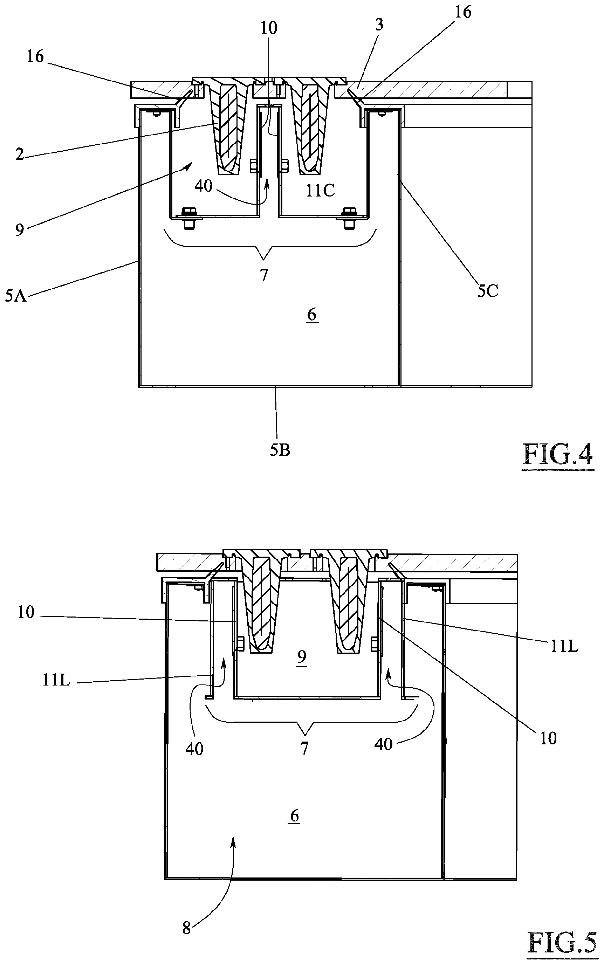

figure 4 is a simplified section view taken along the line IV-IV of figure 1; and
figure 5 is a simplified section view taken along the line V-V of figure 1.

### DETAILED DESCRIPTION OF THE INVENTION

With reference to the quoted figures, a machine for forming lipsticks is shown wholly indicated with reference numeral 1.

The machine for forming lipsticks can comprise a plurality of units intended for pre-heating the molds 20, for pouring 21, for cooling them 22 and for extraction 23.

As can be seen from the drawings, in this specific case the various units are arranged around a movable table 3 equipped with through holes in which the deformable molds 2, for example made of silicone, are housed.

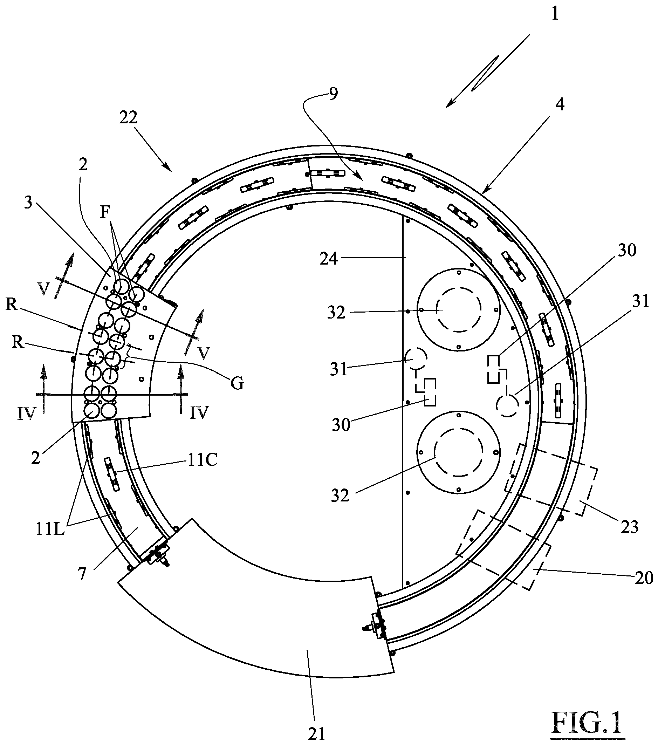

The movable table 3 can have one or, like in figure 1, two columns F of concentric molds, where the molds are organized in rows R aligned radially.

It should be said that the movable table, in alternative embodiments, can be a translating instead of a rotating table.

In any case, the movable table cooperates with a cooling unit 4, which comprises a part arranged below the table itself.

In figure 1 much of the movable table has been removed for the sake of simplicity and to show the part of the cooling unit 4 that is below the table 3.

In figure 1 it is also possible to see a case 24 that encloses a plurality of devices slaved to the operation of the cooling unit 4, like for example an evaporator 30 of a cooling system 31 and a fan 32 adapted for forcibly introducing a pressurized cooling fluid (in the example air) inside a conduit 8. The cooling fluid, before being introduced into the conduit 8, is advantageously sucked from a compartment 9 (in which the molds 2 are present and that will be described hereinafter) and is cooled by the evaporator 30.

It should be noted that there can be two cooling systems that operate simultaneously and each comprise an evaporator, a cooling system and a fan. Alternatively, one of the two systems can operate as a backup for the other, in the case of malfunctions.

The cooling unit 4 comprises a compartment 9 facing the molds 2 present in the cooling unit 4, equipped with a shaped baffle 7 forming an at least partial interface with the conduit 8.

The conduit 8 and the compartment 9 can be made in a space 6 delimited by perimeter walls 5A, 5B, 5C and by the movable table 3. Advantageously there can be sealing means 16 between the perimeter walls 5A and 5C and the movable table.

A pair of side box-shaped elements 11L fluidly connected to the conduit 8 are made on the shaped baffle 7.

A plurality of middle box-shaped elements 11C also fluidly connected to the conduit 8 are also made on the shaped baffle 7.

The fluid communication between the conduit 8 and the box-shaped elements takes place through an open base thereof 40, indeed on the conduit 8.

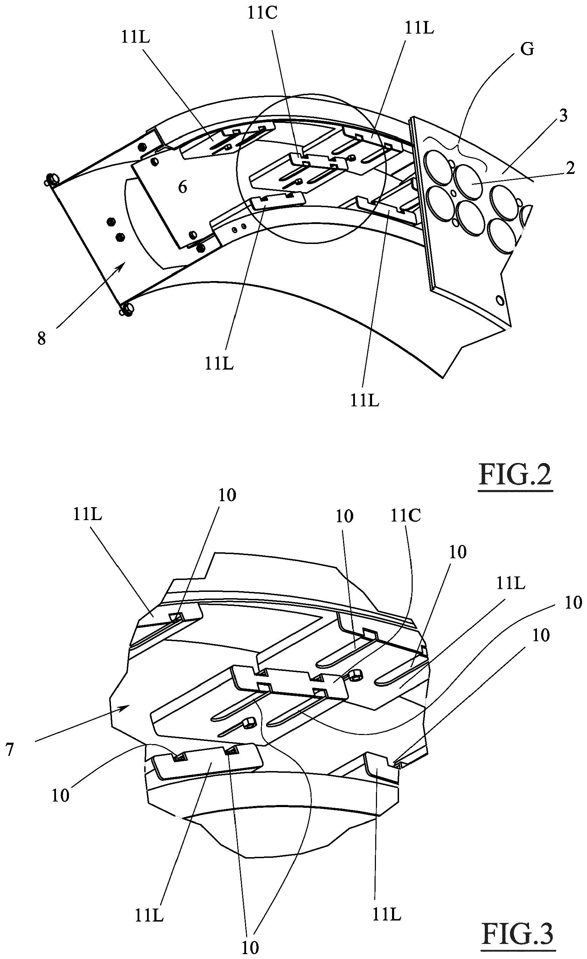

As can be seen from the drawings, in particular from those of figure 3, each middle box-shaped element 11C has four openings 10 (but there can also be only two) aligned on opposite sides of the box-shaped element 11L itself.

There are also openings 10 on the side box-shaped elements 11L. They can be arranged so that the openings 10 of each side box-shaped element 11L face those of the side box-shaped element 11L facing it. There can be two openings 10 for each side box-shaped element 11L, both arranged on a single face thereof.

However, it is also possible to provide the side box-shaped elements with a single opening.

Advantageously, the middle box-shaped elements 11C are arranged in the space in staggered position with respect to the side box-shaped elements 11L, as can be clearly seen in figures 1 and 2.

In this way, a group G of four molds (two rows) will firstly face a pair of side box-shaped elements 11L, and at the next step of the movable table 3, will face a middle box-shaped element 11C.

Indeed, the 'step' of the rotating table 3 illustrated in the present invention is a double step (the table moves two rows in each step), and therefore at least the pouring unit 21 and the extraction unit 23 are designed to work on a group of four molds simultaneously. The cooling unit 4, on the other hand, works on many groups of four molds simultaneously. Basically, the cooling unit depicted simultaneously treats 48 molds that remain inside the unit for 24 steps of the table 3.

By means of the box-shaped elements 11C and 11L therefore openings 10 are provided in the compartment 8, said openings 10 being adapted for conveying the cooling fluid in predetermined positions of the molds 2 when the molds are facing said openings 10.

It should be said that the openings 10 can also be provided in other positions and not directly on the box-shaped elements as described above. However, advantageously, the openings 10 have an elongated shape so as to concentrate the cooling fluid on a side surface of the mold.

According to the present invention, each opening 10 has a length which is comparable with the axial length of the mold 2. Moreover, each opening 10 conveys the cooling fluid on the mold 2 facing the opening 10 in a radial direction with respect to the longitudinal axis of the mold 2.

The length of the openings 10 is comparable with the axial length of the mold whereas a width of the openings can be comparable to the axial width of the mold 2.

As can be seen from the figures, the openings extend in mainly vertical direction so as to concentrate the cooling fluid on the side surface of a single mold 2 when a single opening is facing the mold 2.

Advantageously, for every row R of molds that can be treated simultaneously by the cooling unit 4 there are at least two openings 10.

The step of the movable table can be adjusted so that for each movement thereof the axes of the molds 2 are centered on the openings 10 facing the molds.

In this way, the cooling fluid (air) is conveyed in a localized manner on the side walls of the mold, very close to them, thus obtaining a substantial improvement of the cooling efficiency of the mold itself.

Basically, instead of conveying cold air into a space where the molds are housed like in the prior art, the openings 10 act singularly on the molds cooling them one by one. Moreover, with respect to conventional cooling units, the air conveyed onto the molds 2 has a greater pressure for the same mass flow rate of the cooling fluid circulating; this effect also improves the heat exchange between air and mold to the benefit of the process efficiency.

In particular the described solution is more efficient than the one of JP 3 357994 B2. This patent describes a cooling unit capable of conveying the refrigerant in an axial direction with respect of the mould, from its top to its bottom. The refrigerating action provided on the mould by this system is not homogenous as the cooling fluid warms up flowing from the top of the mold to its bottom. Therefore, the bottom part of the mould may not be refrigerated with the same efficiency of the top part.

With the present invention, the cooling fluid acting against the bottom part of the mold has the same temperature of the one acting against the top part; therefore, the mould is cooled down in a more homogenous way.

Various embodiments of the invention have been described, but others can be devised by exploiting the same innovative concept, without departing from the scope of the invention as defined in the appended claims.

## Claims

1. A machine (1) for forming lipsticks in deformable molds (2), comprising a movable table (3) for supporting the deformable molds (2) and a cooling unit (4) where the movable table (3) conveys the molds (2) to cool them, wherein the cooling unit provides a conduit (8) for supplying a cooling fluid and a compartment (9) facing the molds (2) having a shaped baffle (7) forming an at least partial interface with the conduit (8), the shaped baffle (7) having a plurality of openings (10) adapted to convey the cooling fluid directly onto a side wall of the molds (2) when at least one side wall of a mold is facing said opening (10), **characterized in that** each opening (10) has a length which is comparable with the axial length of the mold (2) and **in that** each opening (10) conveys the cooling fluid on the mold (2) facing the opening (10) only in a radial direction with respect to the longitudinal axis of the mold (2), so that the cooling fluid acting against the bottom part of the mold has the same temperature of the one acting against the top part of the mold.

2. A machine according to claim 1, wherein each opening (10) extends in mainly vertical direction so as to concentrate the cooling fluid on the side surface of a single mold (2) when a single opening is facing the mold (2).

3. A machine according to the preceding claim, wherein the movable table (3) has at least a column (F) of molds (2) arranged in a plurality of rows (R), the cooling unit having at least two openings (10) for each row (R) of molds that can be treated at the same time by the cooling unit (4).

4. A machine according to one or more of the preceding claims, wherein the openings (10) have a width which is comparable to the axial width of the mold (2) so as to concentrate the cooling fluid on a wall of the mold, thus minimizing the dispersions.

5. A machine according to one or more of the preceding claims, wherein the shaped baffle (7) defines at least a pair of side box-shaped elements (11L) fluidly connected to the conduit (8), said openings (10) being made on the facing sides of said side box-shaped elements (11L) so that the openings (10) of each side box-shaped element faces the ones of the side box-shaped element facing it.

6. A machine according to the preceding claim, wherein said rotating table (3) provides at least two columns (F) of molds (2), the baffle (7) comprising a plurality of middle box-shaped elements (11C), each provided with at least two openings (10) aligned on opposite sides of the box-shaped element.

7. A machine according to the preceding claim, wherein the middle box-shaped elements (11C) are arranged in the compartment (9) in staggered position with respect to the side box-shaped elements (11L).

8. A machine according to one or more of the preceding claims, wherein the middle box-shaped elements have four openings (10) aligned two by two and arranged on opposite faces of the middle box-shaped elements (11C) and/or wherein the side box-shaped elements (11L) have two openings (10), both arranged on a single face.

9. A machine according to one or more of the preceding claims, wherein the conduit (8) and the compartment (9) are made inside a space (6) defined by perimeter walls (5A, 5B, 5C) and by the movable table (3), and by the shaped baffle (7) which separates the conduit (8) and the compartment (9), and/or wherein sealing means (16) are provided between the perimeter walls (5A, 5C) and the movable table (3).

10. A machine according to one or more of the preceding claims, wherein the movable table (3) is a step-by-step movable rotating table, so that the axes of the molds are centered on the openings (10) at each step, and/or wherein the cooling fluid is air, and/or wherein there are means for the forced introduction of pressurized air into the conduit (8), and/or wherein there are means for recovering the air from the compartment (9), and/or wherein there are cooling and recirculating means in the conduit (8) of the air taken from the compartment (9).

## Patentansprüche

1. Maschine (1) zum Formen von Lippenstiften in verformbaren Formen (2), umfassend einen bewegbaren Tisch (3) zum Tragen der verformbaren Formen (2) und eine Kühleinheit (4), wohin der bewegbare Tisch (3) die Formen (2) leitet, um sie zu kühlen, wobei die Kühleinheit eine Leitung (8) zum Zuführen eines Kühlfluids und ein den Formen (2) zugewandtes Fach (9) mit einem geformten Prallblech (7) bereitstellt, das eine mindestens teilweise Grenzfläche mit der Leitung (8) bildet, wobei das geformte Prallblech (7) eine Vielzahl von Öffnungen (10) aufweist, die angepasst sind, um das Kühlfluid direkt auf eine Seitenwand der Formen (2) zu leiten, wenn mindestens eine Seitenwand einer Form der Öffnung (10) zugewandt ist, **dadurch gekennzeichnet, dass** jede Öffnung (10) eine Länge aufweist, die mit der axialen Länge der Form (2) vergleichbar ist, und dass jede Öffnung (10) das Kühlfluid auf die der Öffnung (10) nur in eine radiale Richtung in Bezug auf die Längsachse der Form (2) zugewandte Form (2) leitet, so dass das gegen den unteren Teil der Form strömende Kühlfluid die gleiche Temperatur wie das gegen den oberen Teil der Form strömende aufweist.

2. Maschine nach Anspruch 1, wobei sich jede Öffnung (10) in eine hauptsächlich vertikale Richtung erstreckt, um das Kühlfluid auf der Seitenfläche einer einzigen Form (2) zu konzentrieren, wenn eine einzige Öffnung der Form (2) zugewandt ist.

3. Maschine nach dem vorhergehenden Anspruch, wobei der bewegbare Tisch (3) mindestens eine Säule (F) von in einer Vielzahl von in Reihen (R) angeordneten Formen (2) aufweist, wobei die Kühleinheit mindestens zwei Öffnungen (10) für jede Reihe (R) von Formen aufweist, die zur gleichen Zeit durch die Kühleinheit (4) behandelt werden können.

4. Maschine nach einem oder mehreren der vorhergehenden Ansprüche, wobei die Öffnungen (10) eine Breite aufweisen, die vergleichbar mit der axialen Breite der Form (2) ist, um das Kühlfluid auf einer Wand der Form zu konzentrieren, wodurch die Dispersionen minimiert werden.

5. Maschine nach einem oder mehreren der vorhergehenden Ansprüche, wobei das geformte Prallblech (7) mindestens ein Paar von fluidtechnisch mit der Leitung (8) verbundenen kastenförmigen Seitenelementen (11L) definiert, wobei die Öffnungen (10) auf den einander zugewandten Seiten der kastenförmigen Seitenelemente (11L) ausgebildet sind, sodass die Öffnungen (10) jedes kastenförmigen Seitenelements denen des ihm zugewandten kastenförmigen Seitenelements zugewandt sind.

6. Maschine nach dem vorhergehenden Anspruch, wobei der Drehtisch (3) mindestens zwei Säulen (F) von Formen (2) bereitstellt, wobei das Prallblech (7) eine Vielzahl von kastenförmigen mittleren Elementen (11C) umfasst, die jeweils mit mindestens zwei auf gegenüberliegenden Seiten des kastenförmigen Elements ausgerichteten Öffnungen (10) bereitgestellt sind.

7. Maschine nach dem vorhergehenden Anspruch, wobei die kastenförmigen mittleren Elemente (11C) im Fach (9) in versetzter Position in Bezug auf die kastenförmigen Seitenelemente (11L) angeordnet sind.

8. Maschine nach einem oder mehreren der vorhergehenden Ansprüche, wobei die kastenförmigen mittleren Elemente vier Öffnungen (10) aufweisen, die paarweise ausgerichtet und auf gegenüberliegenden Flächen der kastenförmigen mittleren Elemente (11C) angeordnet sind, und/oder wobei die kastenförmigen Seitenelemente (11L) zwei Öffnungen (10) aufweisen, wobei beide auf einer einzigen Fläche angeordnet sind.

9. Maschine nach einem oder mehreren der vorhergehenden Ansprüche, wobei die Leitung (8) und das Fach (9) in einem Raum (6) ausgebildet sind, der durch Umfassungswände (5A, 5B, 5C) und durch den bewegbaren Tisch (3) und durch das geformte Prallblech (7) definiert ist, das die Leitung (8) und das Fach (9) trennt, und/oder wobei Dichtungsmittel (16) zwischen den Umfassungswänden (5A, 5C) und dem bewegbaren Tisch (3) bereitgestellt sind.

10. Maschine nach einem oder mehreren der vorhergehenden Ansprüche, wobei der bewegbare Tisch (3) ein schrittweise bewegbarer Drehtisch ist, sodass die Achsen der Formen bei jedem Schritt auf die Öffnungen (10) zentriert sind, und/oder wobei das Kühlfluid Luft ist, und/oder wobei es Mittel für die zwangsweise Einleitung von Druckluft in die Leitung (8) gibt, und/oder wobei es Mittel zum Rückgewinnen der Luft aus dem Fach (9) gibt, und/oder wobei es in der Leitung (8) Kühl- und Rückführungsmittel von der aus dem Fach (9) entnommen Luft gibt.

## Revendications

1. Machine (1) destinée à former des rouges à lèvres dans des moules déformables (2), comprenant une table mobile (3) destinée à supporter les moules déformables (2) et une unité de refroidissement (4) vers laquelle la table mobile (3) transporte les moules (2) pour les refroidir, ladite unité de refroidissement fournissant un conduit (8) destiné à distribuer un fluide de refroidissement et un compartiment (9) faisant face aux moules (2) possédant un déflecteur façonné (7) formant une interface au moins partielle avec le conduit (8), ledit déflecteur façonné (7) possédant une pluralité d'ouvertures (10) conçues pour transporter le fluide de refroidissement directement sur une paroi latérale des moules (2) lorsqu'au moins une paroi latérale d'un moule fait face à ladite ouverture (10), **caractérisée en ce que** chaque ouverture (10) possède une longueur qui est comparable avec la longueur axiale du moule (2) et **en ce que** chaque ouverture (10) transporte le fluide de refroidissement sur le moule (2) faisant face à l'ouverture (10) uniquement selon une direction radiale par rapport à l'axe longitudinal du moule (2), afin que le fluide de refroidissement agissant contre la partie inférieure du moule possède la même température que celui agissant contre la partie supérieure du moule.

2. Machine selon la revendication 1, chaque ouverture (10) s'étendant principalement selon la direction verticale de façon à concentrer le fluide de refroidissement sur la surface latérale d'un moule unique (2) lorsqu'une seule ouverture fait face au moule (2).

3. Machine selon la revendication précédente, ladite table mobile (3) possédant au moins une colonne (F) de moules (2) agencés en une pluralité de lignes (R), ladite unité de refroidissement possédant au moins deux ouvertures (10) pour chaque ligne (R) de moules qui peuvent être traités en même temps par l'unité de refroidissement (4).

4. Machine selon l'une quelconque ou plusieurs des revendications précédentes, lesdites ouvertures (10) possédant une largeur qui est comparable à la largeur axiale du moule (2) de façon à concentrer le fluide de refroidissement sur une paroi du moule, minimisant ainsi les dispersions.

5. Machine selon l'une quelconque ou plusieurs des revendications précédentes, ledit déflecteur façonné (7) définissant au moins une paire d'éléments en forme de boîte latéraux (11L) raccordés fluidiquement au conduit (8), lesdites ouvertures (10) étant ménagées sur les côtés en vis-à-vis desdits éléments en forme de boîte latéraux (11L) afin que les ouvertures (10) de chaque élément en forme de boîte latéral soient en face de celles de l'élément en forme de boîte latéral lui faisant face.

6. Machine selon la revendication précédente, ladite table tournante (3) fournissant au moins deux colonnes (F) de moules (2), ledit déflecteur (7) comprenant une pluralité d'éléments en forme de boîte centraux (11C), chacun doté d'au moins deux ouvertures (10) alignées sur des côtés opposés de l'élément en forme de boîte.

7. Machine selon la revendication précédente, lesdits éléments en forme de boîte centraux (11C) étant agencés dans le compartiment (9) en position décalée par rapport aux éléments en forme de boîte latéraux (11L).

8. Machine selon l'une quelconque ou plusieurs des revendications précédentes, lesdits éléments en forme de boîte centraux possédant quatre ouvertures (10) alignées deux par deux et agencées sur des faces opposées des éléments en forme de boîte centraux (11C) et/ou lesdits éléments en forme de boîte latéraux (11L) possédant deux ouvertures (10), toutes deux agencées sur une seule face.

9. Machine selon l'une quelconque ou plusieurs des revendications précédentes, ledit conduit (8) et ledit compartiment (9) étant construits à l'intérieur d'un espace (6) défini par des parois de périmètre (5A, 5B, 5C) et par la table mobile (3) et par le déflecteur façonné (7) qui sépare le conduit (8) et le compartiment (9) et/ou des moyen d'étanchéité (16) étant disposés entre les parois de périmètre (5A, 5C) et la table mobile (3).

10. Machine selon l'une quelconque ou plusieurs des revendications précédentes, ladite table mobile (3) étant une table tournante mobile étape par étape, afin que les axes des moules soient centrés sur les ouvertures (10) à chaque étape et/ou ledit fluide de refroidissement étant de l'air et/ou des moyens permettant l'introduction forcée d'air sous pression dans le conduit (8) étant présents et/ou des moyens permettant la récupération de l'air provenant du compartiment (9) étant présents et/ou des moyens de refroidissement et de recirculation dans le conduit (8) de l'air prélevé du compartiment (9) étant présents.
